# FASCICULE DE BREVET EUROPEEN

(11) **EP 3 912 531 B1**
(45) Date de publication et mention de la délivrance du brevet: **11.02.2026**
(21) Numéro de dépôt: 21174554.2
(22) Date de dépôt: 18.05.2021
(51) Int. Cl.: A47J 37/06

(54) **APPAREIL DE CUISSON A AIR CHAUD EQUIPE D'UN DISPOSITIF DE CHAUFFE D'UNE CUVE PAR CONDUCTION THERMIQUE**
HEISSLUFTKOCHGERÄT MIT EINER VORRICHTUNG ZUR BEHEIZUNG EINES GEFÄSSES DURCH WÄRMELEITUNG
HOT AIR COOKING APPLIANCE PROVIDED WITH A DEVICE FOR HEATING A TANK BY HEAT CONDUCTION

(30) Priorité: 19.05.2020 FR 2005040
(43) Date de publication de la demande: 24.11.2021
(73) Titulaire: SEB S.A., 69130 Ecully (FR)
(72) Inventeur: ALLEMAND, Bernard, 70100 VELESMES-ECHEVANNE (FR); FRADET, Gautier, 21120 ECHEVANNES (FR)
(74) Mandataire: SEB Développement

(56) Documents cités:
- EP-A1- 3 621 499
- EP-B1- 3 621 499
- WO-A1-2011/067532
- CN-U- 204 192 406
- CN-U- 207 125 648
- US-A1- 2017 273 508

## Description

### Domaine technique

La présente invention concerne les appareils de cuisson à air chaud du type friteuse à air chaud qui permettent de réaliser une cuisson des aliments au moyen d'une circulation d'air chaud dans une enceinte de cuisson de cet appareil.

L'invention a pour objectif principal d'étendre les fonctions d'un tel appareil de cuisson afin qu'il dispose de plusieurs modes de cuisson permettant de cuisiner des recettes diverses et variées.

### Etat de la technique

Les appareils de cuisson du type friteuse à air chaud sont bien connus de l'homme du métier, par exemple l'appareil décrit dans le document CN 207125648 U. Un tel appareil de cuisson permet de réduire fortement la quantité de matière grasse, voire de la supprimer complètement, lors de la cuisson des aliments qui s'effectue grâce à une circulation d'air chaud dans une enceinte de cuisson contenant les aliments à cuire. Ainsi, il est possible de consommer des aliments plus diététiques, ces aliments pouvant être d'origine végétale ou animale, par exemple des frites, des légumes, de la viande ou du poisson.

Un tel appareil de cuisson comprend généralement un corps et une cuve amovible qui permet la réception des aliments à cuire. Les aliments peuvent être placés soit directement dans la cuve soit dans un panier qui est lui-même placé dans la cuve. Une fois les aliments disposés dans la cuve, avec ou sans le panier, le corps de l'appareil de cuisson peut être fermé pour former une enceinte de cuisson incorporant la cuve et les aliments. De l'air chaud est ensuite pulsé dans cette enceinte de cuisson au moyen d'un dispositif de chauffe et d'un dispositif de circulation d'air, la circulation de l'air chaud dans l'enceinte assurant la cuisson des aliments.

Le dispositif de circulation d'air comprend un ventilateur qui permet une circulation de l'air en boucle à l'intérieur du corps de l'appareil de cuisson de sorte à acheminer cet air jusqu'à l'enceinte de cuisson en passant par le dispositif de chauffe, l'air chauffé circulant dans la cuve avant de sortir de l'enceinte de cuisson et d'effectuer un nouveau cycle de circulation dans le corps de l'appareil de cuisson.

En outre, un tel appareil comprend parfois un dispositif additionnel de chauffe permettant de chauffer la cuve de réception d'aliments par conduction thermique et un circuit de commande agencé pour le contrôle du dispositif additionnel de chauffe une fois la cuve placée dans l'enceinte de cuisson.

En outre, il est connu du document CN204192406 un appareil à air chaud comprenant une base et un tiroir monté de manière amovible sur la base entre une position engagée où l'enceinte de cuisson est fermée et une position dégagée où l'enceinte de cuisson est ouverte, la cuve étant assujettie au tiroir.

Bien que ces appareils de cuisson à air chaud permettent déjà de cuisiner des préparations culinaires diverses et variées, avec une cuisson saine des aliments, au moyen de cet circulation d'air chaud dans l'enceinte de cuisson, il reste une volonté d'étendre les fonctions de ces appareils de cuisson à air chaud afin de pouvoir réaliser des préparations culinaires plus variées ne pouvant être cuisinées au moyen des appareils de cuisson à air chaud traditionnels.

### Exposé de l'invention

A cet effet, l'invention concerne un appareil de cuisson à air chaud pour la réalisation d'une préparation culinaire. L'appareil de cuisson comprend un corps muni d'une enceinte de cuisson, une cuve de réception d'aliments apte à être placée dans l'enceinte de cuisson et retirée de celle-ci, une base et un tiroir monté de manière amovible sur la base entre une position engagée où l'enceinte de cuisson est fermée et une position dégagée où l'enceinte de cuisson est ouverte, la cuve étant assujettie au tiroir, un dispositif de chauffe permettant de chauffer de l'air et un dispositif de circulation permettant une circulation de l'air chauffé dans la cuve de réception d'aliments lorsqu'elle est placée dans l'enceinte de cuisson. De manière remarquable, l'appareil de cuisson comprend un dispositif additionnel de chauffe permettant de chauffer la cuve de réception d'aliments par conduction thermique.

Ainsi, les modes de cuisson peuvent être étendus grâce à l'appareil de cuisson à air chaud selon l'invention. En effet, l'appareil peut toujours réaliser des cuissons traditionnelles au moyen du dispositif de chauffe de l'air et du dispositif de circulation de l'air chauffé. L'appareil peut en outre réaliser la cuisson de liquides tels que des soupes ou des plats en sauce placés dans la cuve, lesquels sont chauffés par conduction thermique au moyen du dispositif additionnel de chauffe. L'appareil peut aussi permettre la réalisation de cuisson vapeur, lorsqu'un panier contenant les aliments est placé dans la cuve et que de l'eau est placée dans le fond de la cuve, en-dessous du panier ; la chauffe de l'eau par conduction thermique au moyen du dispositif additionnel de chauffe permet de faire bouillir cette eau et de générer de la vapeur assurant la cuisson des aliments dans le panier lui-même placé dans la cuve. Une cuisson vapeur, suivie d'une cuisson au moyen de l'air chaud circulant dans l'enceinte de cuisson, pourrait également être envisagée au moyen de l'appareil selon l'invention.

Selon l'invention, l'appareil de cuisson comprend un circuit de commande agencé pour contrôler le dispositif additionnel de chauffe, une fois la cuve placée dans l'enceinte de cuisson et en fonction du mode de préparation culinaire sélectionné par l'utilisateur. Ce circuit de commande contrôle également le dispositif de chauffe de l'air et le dispositif de circulation de l'air chauffé, une fois la cuve placée dans l'enceinte de cuisson et en fonction du mode de préparation culinaire sélectionné par l'utilisateur.

Selon l'invention, le dispositif additionnel de chauffe est agencé sur la cuve de réception d'aliments. En outre, le dispositif additionnel de chauffe comprend un premier système de connexion électrique et mécanique agencé pour se connecter à un second système de connexion complémentaire disposé sur le corps de l'appareil de cuisson, lors du positionnement de la cuve dans l'enceinte de cuisson. Le positionnement du dispositif additionnel de chauffe sur la cuve permet d'assurer une meilleure conduction thermique et un meilleur contrôle de la température dans la cuve. Selon l'invention, le circuit de commande est agencé pour contrôler le dispositif additionnel de chauffe une fois la connexion entre les premier et second systèmes de connexion effectuée.

Selon l'invention, le premier système de connexion comprend deux broches conductrices et le second système de connexion comprend deux connecteurs conducteurs ayant chacun deux lamelles flexibles, chaque broche conductrice s'embrochant dans un connecteur conducteur par pincement entre les deux lamelles dudit connecteur, lors du positionnement de la cuve dans l'enceinte de cuisson. Des variantes pourraient être envisagées, par exemple en inversant les broches et les lamelles sur le premier système de connexion et sur le second système de connexion.

De préférence, selon ce mode de réalisation de l'appareil de cuisson, le dispositif additionnel de chauffe est positionné sous un fond de la cuve, en contact avec ledit fond. Cela permettra de chauffer convenablement le fond de la cuve par conduction thermique. Des variantes pourraient être envisagées, par exemple en plaçant le dispositif additionnel de chauffe au contact d'un contour inférieur de la cuve.

De préférence, selon ce mode de réalisation de l'appareil de cuisson, le dispositif additionnel de chauffe comprend un organe électrique résistif muni de deux extrémités, le premier système de connexion étant agencé auxdites extrémités.

Selon une réalisation de l'appareil de cuisson objet de l'invention, le corps comprend un moteur contrôlé par le circuit de commande et un pignon denté entraîné en rotation par le moteur. En outre, la cuve comprend un fond, une roue dentée montée en rotation sous le fond et un arbre d'entraînement monté en rotation au-dessus du fond et entraîné en rotation par la roue dentée, ledit arbre d'entraînement étant apte à recevoir un accessoire de cuisine pour sa mise en rotation. Par ailleurs, l'appareil de cuisson est configuré pour que la roue dentée vienne en prise avec le pignon denté lors du positionnement de la cuve dans l'enceinte de cuisson. Ainsi, l'appareil de cuisson permet de malaxer ou de brasser des aliments contenus dans la cuve, durant la cuisson.

Selon cette réalisation de l'appareil de cuisson, le dispositif additionnel de chauffe et le premier système de connexion, tels que précités, sont disposés autour de la roue dentée sous le fond de la cuve. De préférence, le premier système de connexion et la roue dentée sont dans un même encombrement que le moteur et le pignon denté disposés sur le corps de l'appareil de cuisson. Cette conception a pour avantage de réduire l'encombrement de l'appareil de cuisson

Selon cette réalisation de l'appareil de cuisson, celui-ci comprend un élément d'étanchéité disposé entre l'arbre d'entrainement et le fond de la cuve. Cela permet l'incorporation de liquide dans la cuve sans compromettre son étanchéité.

De préférence, selon cette réalisation de l'appareil de cuisson, celui-ci comprend un accessoire de cuisine constitué d'une pale de brassage. D'autres accessoires pourraient être envisagés, par exemple des couteaux pour hacher ou mixer des aliments dans la cuve, voire un malaxeur.

De préférence, l'appareil de cuisson comprend un panier amovible configuré pour être placé dans la cuve et retiré de celle-ci. Une variante de réalisation de l'appareil de cuisson pourrait être envisagée, selon laquelle le corps comporterait un couvercle permettant de venir loger la cuve dans l'enceinte de cuisson, avec ou sans le panier, la fermeture du couvercle permettant la fermeture de l'enceinte de cuisson.

### Brève description des figures

Les caractéristiques et avantages de l'invention apparaîtront à la lecture de la description suivante s'appuyant sur des figures, parmi lesquelles :
[Fig. 1] La figure 1 illustre une vue en coupe d'un appareil de cuisson à air chaud selon l'invention ;
[Fig. 2] La figure 2 illustre une vue de face du corps de l'appareil de cuisson à air chaud de la figure 1, sans le tiroir de cet appareil ;
[Fig. 3] La figure 3 illustre selon un premier angle de vue le tiroir de l'appareil de cuisson à air chaud de la figure 1, ledit tiroir incorporant la cuve ;
[Fig. 4] La figure 4 illustre un second angle de vue du tiroir de la figure 3, montrant la présence d'un accessoire rapporté dans la cuve ;
[Fig. 5] La figure 5 illustre une vue en coupe du tiroir des figures 3 et 4 ;
[Fig. 6] La figure 6 illustre la connexion entre un premier système de connexion électrique et mécanique d'un dispositif additionnel de chauffe agencé sur la cuve et un second système de connexion complémentaire agencé sur le corps de l'appareil de cuisson à air chaud ;
[Fig. 7] La figure 7 illustre un connecteur conducteur du second système de connexion complémentaire illustré sur la figure 6 ;

### Description détaillée de l'invention

Dans la suite de la description, le terme appareil est utilisé pour désigner l'appareil de cuisson selon l'invention.

Les termes « supérieur », « inférieur », « haut », « bas », « avant », « arrière », « latéral », « vertical », « horizontal », qui pourraient être utilisés dans la présente description, le seront en considération de la position normale de l'appareil placé dans une configuration fonctionnelle, face à l'utilisateur et reposant sur un plan de cuisine.

En outre, les mêmes références seront utilisées dans la suite de la description pour définir les mêmes caractéristiques ou leurs équivalents selon les différentes variantes de conception de l'appareil objet de l'invention, sauf indication dans le texte.

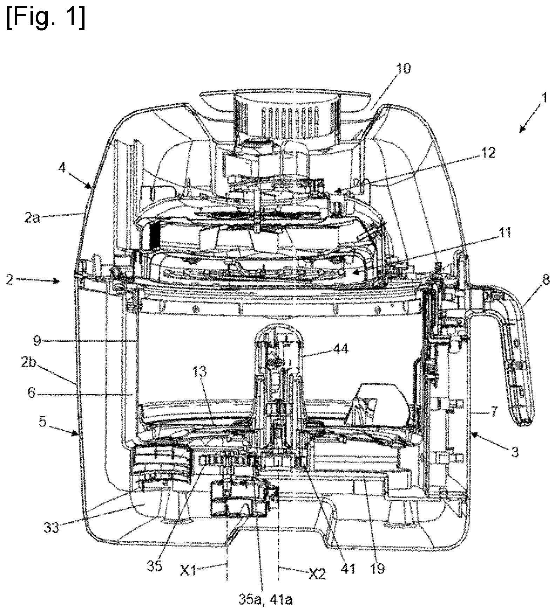

En regard des figures 1 à 3, l'appareil 1 comprend un corps 2 et un tiroir 3. Le tiroir 3 est amovible du corps 2. Le corps 2 comprend dans sa partie supérieure 2a un bloc de chauffe 4 et dans sa partie inférieure 2b une base 5. A l'intérieur de cette base 5 est définie une enceinte de cuisson 6. Le tiroir 3 comprend une façade 7, une poignée de manipulation 8 et une cuve 9 permettant la réception des aliments à cuire ; lorsque le tiroir 3 est placé sur la base 5 du corps 2, la cuve 9 est logée dans l'enceinte de cuisson 6 qui est fermée grâce à la façade 7. L'extraction du tiroir 3 s'effectue en le tirant vers l'avant par rapport au corps 2, ce qui permet de dégager la cuve 9 de l'enceinte de cuisson 6. Le bloc de chauffe 4 permet de faire circuler de l'air chaud vers le bas en direction de l'enceinte de cuisson 6 de sorte que lorsque le tiroir 3 est placé sur la base 5 du corps 2, ledit air chaud circule dans l'enceinte de cuisson 6 et dans la cuve 9. Le bloc de chauffe 4 comprend une entrée d'air 10, un dispositif de chauffe 11 du type résistif qui permet de chauffer l'air circulant et un dispositif de circulation 12 du type ventilateur qui permet de faire circuler l'air et de le propulser jusque dans l'enceinte de cuisson 6 en passant au préalable par ledit dispositif de chauffe 11 de l'air. L'appareil 1 comprend en outre un circuit de commande (non illustré) qui permet de contrôler le dispositif de chauffe 11 et le dispositif de circulation 12 lorsque le tiroir 3 est placé sur la base 5 du corps 2 et en fonction du programme de cuisson sélectionné sur un clavier de sélection (non illustré) agencé sur ledit corps 2. De telles caractéristiques existent déjà traditionnellement sur les appareils de cuisson à air chaud du type friteuse à air chaud ; l'homme du métier pourra s'y référer pour la mise en œuvre de l'appareil 1 selon l'invention.

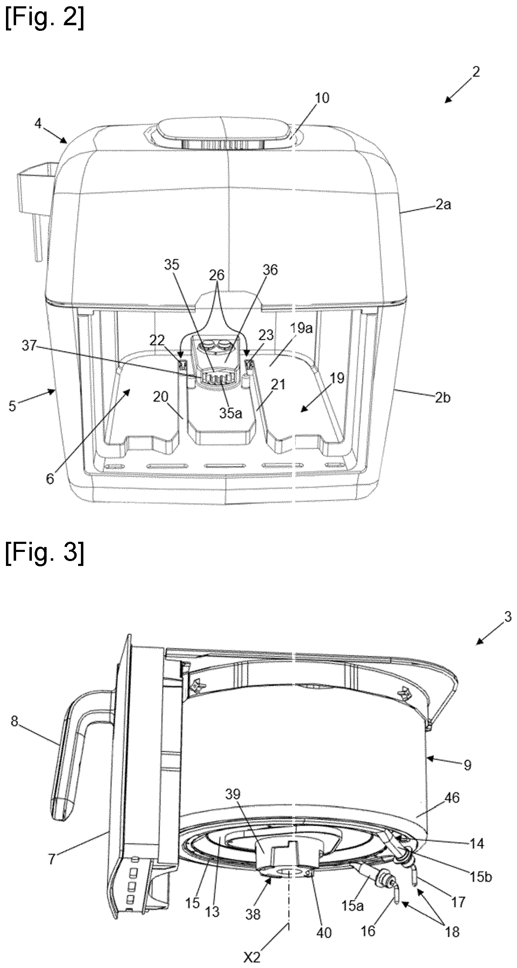

L'appareil 1 selon l'invention permet avantageusement de chauffer par conduction thermique la cuve 9 lorsque celle-ci est placée dans l'enceinte de cuisson 6, ce qui permet d'étendre les fonctions de cet appareil 1, en réalisant par exemple des cuissons de liquides contenus dans la cuve 9, voire des cuissons vapeurs en plaçant dans cette cuve 9 un panier (non illustré) et un fond d'eau, le panier étant placé de manière amovible dans la cuve 9 et recevant des aliments à cuire. La présence d'un tel panier amovible est déjà connue sur les appareils de cuisson à air chaud traditionnels. Différentes conceptions de l'appareil 1 sont envisageables pour la mise en œuvre de cette chauffe de la cuve 9 par conduction thermique :
Selon un mode de conception de l'appareil 1, illustré notamment en regard des figures 2, 3 et 5 à 7, la cuve 9 comprend un fond 13 en-dessous duquel est fixé un dispositif additionnel de chauffe 14 qui assure ladite chauffe de la cuve 9 par conduction thermique. La fixation du dispositif additionnel de chauffe 14 sous le fond 13 de la cuve 9 est réalisée par exemple par sertissage ou par soudage ;
on pourrait aussi prévoir des brides de fixation (non illustrées). De préférence, le dispositif additionnel de chauffe 14 est directement en contact avec le fond 13 de la cuve 9, selon ce premier mode de conception, mais on pourrait envisager une variante selon laquelle un léger espacement serait préservé entre le dispositif additionnel de chauffe 14 et le fond 13 de la cuve 9, grâce à des brides de fixation adaptées.

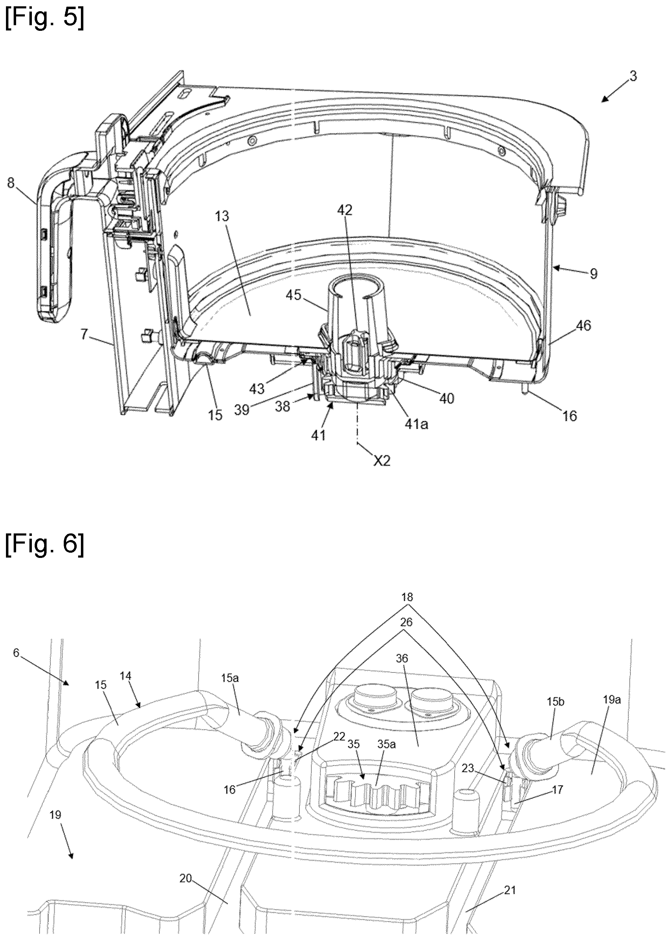

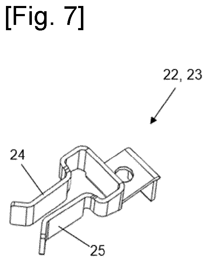

Selon ce mode de conception de l'appareil 1, le dispositif additionnel de chauffe 14 comprend un organe électrique résistif 15 qui présente une forme circulaire ouverte avec deux extrémités 15a, 15b qui sont courbées vers le bas, comme l'illustrent notamment les figures 3 et 6. Ces deux extrémités 15a, 15b comprennent chacune une broche conductrice 16, 17, les deux broches conductrices 16, 17 définissants un premier système de connexion 18 électrique et mécanique. L'enceinte de cuisson 6 du corps 2 présente un fond 19 qui comprend deux rainures 20, 21 qui sont agencées en correspondance avec les deux extrémités 15a, 15b de l'organe électrique résistif 15 de sorte que les deux broches conductrices 16, 17 s'engagent respectivement dans ces deux rainures 20, 21 lorsque la cuve 9 est engagée dans l'enceinte de cuisson 6, lors de la mise en place du tiroir 3 sur le corps 2. Les extrémités arrière 20a, 21a des rainures 20, 21 comprennent chacune un connecteur conducteur 22, 23. Ces connecteurs conducteurs 22, 23 comprennent chacun deux lamelles 24, 25 flexibles et conductrices, comme l'illustre en détail la figure 7. Lorsque le tiroir 3 est convenablement placé sur la base 5 du corps 2, sa façade 7 fermant l'enceinte de cuisson 6, les deux broches conductrices 16, 17 viennent respectivement s'embrocher sur les connecteurs conducteurs 22, 23 par pincement entre les deux lamelles 24, 25. Ces deux connecteurs conducteurs 22, 23 constituent ensemble un second système de connexion 26 complémentaire au premier système de connexion 18 électrique et mécanique. Ce second système de connexion 26 est raccordé au circuit de commande de l'appareil 1 ; ainsi, le circuit de commande permet également le contrôle de dispositif additionnel de chauffe 14 lorsque le tiroir 3 est placé sur la base 5 et en fonction de programme de cuisson sélectionné par l'utilisateur sur le clavier de sélection.

En regard des figures 1 et 2, pour le mode de conception précité, la base 5 du corps 2 comprend un compartiment 33 agencé sous le fond 19 de l'enceinte de cuisson 6. Ce compartiment 33 permet notamment d'y loger un moteur électrique permettant l'entraînement en rotation selon un axe vertical X1 d'un pignon denté 35. Les rainures 20, 21 sur le fond 19 de l'enceinte de cuisson 6 sont également placées dans l'épaisseur de ce compartiment 33, le moteur électrique et le pignon denté 35 étant positionnés entre ces deux rainures 20, 21. Le moteur électrique est contrôlé par le circuit de commande en fonction du programme de cuisson sélectionné par l'utilisateur. Le fond 19 de l'enceinte de cuisson 6 comprend dans sa partie arrière 19a, entre les deux rainures 20, 21 et au niveau des deux connecteurs conducteurs 22, 23, un logement 36 agencé en protubérance par rapport audit fond 19, le logement 36 recevant le pignon denté 35. Ce logement 36 présente à l'avant une fenêtre 37, par laquelle dépasse légèrement une partie avant 35a du pignon denté 35 de sorte qu'il communique avec l'enceinte de cuisson 6. De manière similaire à ce qui précède, sur le second mode de conception des figures 8 à 10, on retrouve dans la partie arrière 19a du fond 19 de l'enceinte de cuisson 6, le logement 36 recevant le pignon denté 35 avec sa partie avant 35a qui dépasse légèrement de la fenêtre 37. Sur cette seconde conception, l'organe électrique résistif 27 est positionné autour du logement 36 de sorte que la partie avant 35a du pignon denté 35 soit accessible en passant par le passage 30 laissé entre les deux extrémités 28a, 29a des fourches 28, 29 dudit organe électrique résistif 27.

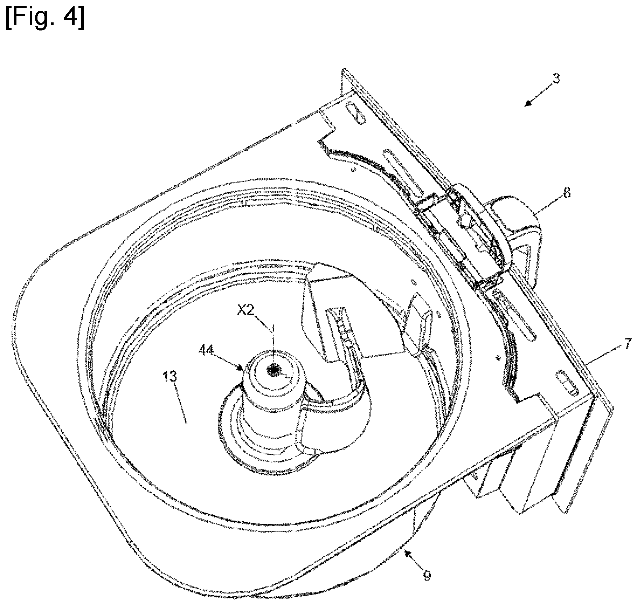

En regard des figures 1 à 5, pour le premier mode de conception précité, la cuve 9 comprend sous la partie centrale de son fond 13 un carter 38 qui comprend à l'arrière de son contour 39 une fenêtre 40. Une roue dentée 41 est montée en rotation selon un axe X2 perpendiculaire au fond 13 de la cuve 9, cet axe X2 étant parallèle à l'axe vertical X1 lorsque le tiroir 3 est placé sur la base 5 du corps 2. Cette roue dentée 41 est logée dans le carter 38 et a sa partie arrière 41a qui dépasse légèrement de la fenêtre 40. Lorsque le tiroir 3 est convenablement placé sur la base 5, l'enceinte de cuisson 6 étant fermée, la partie arrière 41a de la roue dentée 41 vient engrener avec la partie avant 35a du pignon denté 35; l'actionnement du moteur électrique permet ainsi d'entraîner en rotation la roue dentée 41 selon son axe X2. La roue dentée 41 est assujettie à un arbre d'entraînement 42 qui s'étend vers le haut selon l'axe X2 et traverse le fond 13 de la cuve 9. Un élément d'étanchéité 43 est agencé entre le fond 13 de la cuve 9 et l'arbre d'entraînement 42 pour éviter que du liquide, placé dans la cuve 9, passe au travers dudit fond 13. Cet arbre d'entraînement 42 permet d'entraîner en rotation selon l'axe X2 un accessoire 44 de cuisine qui est rapporté de manière amovible dans la cuve 9. Sur la figure 4, cet accessoire 44 est une pale de brassage, mais on pourrait envisager d'autres accessoires de cuisine, par exemple un accessoire de malaxage ou de broyage. La cuve 9 comprend au-dessus de son fond 13 un palier 45 de guidage qui est agencé selon l'axe X2 et permet la réception de l'accessoire 44 pour son guidage en rotation selon l'axe X2, ledit accessoire 42 étant en prise avec l'arbre d'entraînement 42 qui est logé à l'intérieur du palier 45. Comme l'illustre la figure 3, l'organe électrique résistif 15 est agencé autour du carter 38 sous le fond 13 de la cuve 9, sensiblement à la périphérie dudit fond 13, les deux broches conductrices 16, 17 étant disposées à l'arrière de la cuve 9, dans le prolongement de la fenêtre 40 du carter 38. Lorsque le tiroir 3 est placé sur la base 5, la cuve 9 étant logée dans l'enceinte de cuisson 6, les deux broches conductrices 16, 17 et le carter 38 qui reçoit la roue dentée 41 sont dans un même encombrement que le moteur électrique et le logement 36 qui reçoit le pignon denté 35.

Cette mise en œuvre sur la cuve 9, notamment avec le carter 38 qui reçoit la roue dentée 41, avec l'arbre d'entraînement 42 qui est assujetti à ladite roue dentée 41 et qui traverse le fond 13 de la cuve 9 et avec le palier 45 de guidage qui reçoit en rotation l'accessoire 44 entraîné par ledit arbre d'entraînement 42, sera de préférence identique à ce qui est décrit précédemment, sur le second mode de conception des figures 8 à 10. Comme le montrent les figures 8 et 9, le passage 30 laissé entre les deux extrémités 28a, 29a des fourches 28, 29 de l'organe électrique résistif 27, est dimensionné pour permettre l'introduction du carter 38 de la cuve 9 entre lesdites extrémités 28a, 29a, en sorte de venir engrener la roue dentée 41 avec le pignon denté 35.

La description qui précède à l'appui des deux modes de conception des figures 1 à 7 et 8 à 10, n'est en rien limitative, d'autres variantes d'appareil 1 pouvant être envisagées dans le cadre de l'invention. On pourrait par exemple envisager de mettre en œuvre différemment le dispositif additionnel de chauffe 14, par exemple sur le contour inférieur 46 de la cuve 9. On pourrait aussi prévoir une variante de dispositif d'entraînement de l'accessoire 44 rapporté de manière amovible dans la cuve 9, en remplacement du pignon denté 35 et de la roue dentée 41. On pourrait aussi envisager la mise en œuvre de l'invention sur un appareil 1 sans tiroir 3, mais avec un couvercle (non illustré) agencé sur la partie supérieure 2a du corps 2, l'ouverture du couvercle permettant le positionnement de la cuve 9 dans l'enceinte de cuisson 6 et, inversement, son retrait de celle-ci.

## Revendications

1. Appareil (1) de cuisson à air chaud pour la réalisation d'une préparation culinaire, lequel comprend un corps (2) muni d'une enceinte de cuisson (6), une cuve (9) de réception d'aliments apte à être placée dans l'enceinte de cuisson et retirée de celle-ci, le corps (2) comprenant une base (5)**,** un dispositif de chauffe (11) permettant de chauffer de l'air et un dispositif de circulation (12) permettant une circulation de l'air chauffé dans la cuve de réception d'aliments lorsqu'elle est placée dans l'enceinte de cuisson, ledit appareil (1) comprenant un dispositif additionnel de chauffe (14) permettant de chauffer la cuve (9) de réception d'aliments par conduction thermique et un circuit de commande agencé pour le contrôle du dispositif additionnel de chauffe une fois la cuve placée dans l'enceinte de cuisson, **caractérisé en ce que** le corps comprend un tiroir (3) monté de manière amovible sur la base entre une position engagée où l'enceinte de cuisson (6) est fermée et une position dégagée où l'enceinte de cuisson est ouverte, la cuve (9) étant assujettie au tiroir (3), le dispositif additionnel de chauffe (14) étant agencé sur la cuve (9) de réception d'aliments, le dispositif additionnel de chauffe comprenant un premier système de connexion (18) électrique et mécanique agencé pour se connecter à un second système de connexion (26) complémentaire disposé sur le corps (2) lors du positionnement de la cuve (9) dans l'enceinte de cuisson (6), ledit circuit de commande étant agencé pour contrôler le dispositif additionnel de chauffe une fois la connexion entre les premier et second systèmes de connexion effectuée, le premier système de connexion (18) comprenant deux broches conductrices (16, 17) et le second système de connexion (26) comprenant deux connecteurs conducteurs (22, 23) ayant chacun deux lamelles flexibles (24, 25), chaque broche conductrice s'embrochant dans un connecteur conducteur par pincement entre les deux lamelles dudit connecteur, lors du positionnement de la cuve (9) dans l'enceinte de cuisson (6).

2. Appareil (1) selon la revendication 1, dans lequel le dispositif additionnel de chauffe (14) est positionné sous un fond (13) de la cuve (9), en contact avec ledit fond.

3. Appareil (1) selon l'une quelconque des revendications 1 ou 2, dans lequel le dispositif additionnel de chauffe (14) comprend un organe électrique résistif (15) muni de deux extrémités (15a, 15b), le premier système de connexion (18) étant agencé auxdites extrémités.

4. Appareil (1) selon l'une quelconque des revendications 1 à 3, dans lequel le corps (2) comprend un moteur contrôlé par le circuit de commande et un pignon denté (35) entraîné en rotation par le moteur, et la cuve (9) comprend un fond (13), une roue dentée (41) montée en rotation sous le fond et un arbre d'entraînement (42) monté en rotation au-dessus du fond et entraîné en rotation par la roue dentée, ledit arbre d'entraînement étant apte à recevoir un accessoire de cuisine (44) pour sa mise en rotation, ledit appareil (1) étant configuré pour que la roue dentée (41) vienne en prise avec le pignon denté (35) lors du positionnement de la cuve (9) dans l'enceinte de cuisson (6).

5. Appareil (1) selon la revendication 4, dans lequel le dispositif additionnel de chauffe (14) et le premier système de connexion (18) sont disposés autour de la roue dentée (41) sous le fond (13) de la cuve (9).

6. Appareil (1) selon l'une quelconque des revendications 4 ou 5, lequel comprend un élément d'étanchéité (43) disposé entre l'arbre d'entrainement (42) et le fond (13) de la cuve (9).

7. Appareil (1) selon l'une quelconque des revendications 4 à 6, lequel comprend un accessoire de cuisine (44) constitué d'une pale de brassage.

8. Appareil (1) selon l'une des revendications 1 à 7, lequel comprend un panier amovible configuré pour être placé dans la cuve (9) et retiré de celle-ci.

## Patentansprüche

1. Heißluft-Kochgerät (1) zur Zubereitung einer kulinarischen Zubereitung, das einen Körper (2) mit einer Kochkammer (6), ein Nahrungsmittelaufnahmebehälter (9), der in die Kochkammer eingesetzt und aus dieser entfernt werden kann, umfasst, wobei der Körper (2) eine Basis (5), eine Heizvorrichtung (11), die ein Erhitzen von Luft ermöglicht, und eine Zirkulationsvorrichtung (12), die eine Zirkulation der erhitzten Luft im Nahrungsmittelaufnahmebehälter ermöglicht, wenn dieser in die Kochkammer eingesetzt ist, umfasst, wobei das Gerät (1) eine zusätzliche Heizvorrichtung (14) für die Erwärmung des Nahrungsmittelaufnahmebehälters (9) durch Wärmeleitung und eine Steuerungsschaltung zur Steuerung der zusätzlichen Heizvorrichtung, wenn der Behälter in die Kochkammer eingesetzt wird, umfasst, **dadurch gekennzeichnet ist, dass** der Körper eine Schublade (3) umfasst, die abnehmbar auf der Basis zwischen einer eingebauten Position, in der die Kochkammer (6) geschlossen ist, und einer freigegebenen Position, in der die Kochkammer offen ist, montiert ist, wobei der Behälter (9) an der Schublade (3) befestigt ist, die zusätzliche Heizvorrichtung (14) auf dem Nahrungsmittelaufnahmebehälter (9) angeordnet ist, die zusätzliche Heizvorrichtung ein erstes elektrisches und mechanisches Verbindungssystem (18) umfasst, das zur Verbindung mit einem zweiten komplementären Verbindungssystem (26), das am Körper (2) angeordnet ist, beim Positionieren des Behälters (9) in der Kochkammer (6) ausgelegt ist, die genannte Steuerungsschaltung zur Steuerung der zusätzlichen Heizvorrichtung ausgelegt ist, nachdem die Verbindung zwischen den ersten und zweiten Verbindungssystemen hergestellt wurde, wobei das erste Verbindungssystem (18) zwei leitfähige Stifte (16, 17) und das zweite Verbindungssystem (26) zwei leitfähige Verbinder (22, 23) umfasst, die jeweils zwei flexible Lamellen (24, 25) haben, wobei jeder leitfähige Stift durch Einklemmen zwischen die beiden Lamellen des genannten Verbinders in einen leitfähigen Verbinder eingeführt wird, sobald der Behälter (9) in der Kochkammer (6) positioniert wird.

2. Gerät (1) nach Anspruch 1, wobei die zusätzliche Heizvorrichtung (14) unter einem Boden (13) des Behälters (9) in Kontakt mit dem genannten Boden positioniert ist.

3. Gerät (1) nach einem der Ansprüche 1 oder 2, wobei die zusätzliche Heizvorrichtung (14) ein resistives elektrisches Element (15) mit zwei Enden (15a, 15b) umfasst, wobei das erste Verbindungssystem (18) an den genannten Enden angeordnet ist.

4. Gerät (1) nach einem der Ansprüche 1 bis 3, wobei der Körper (2) einen vom Steuerungsschaltkreis gesteuerten Motor und ein durch den Motor in Drehung versetztes Zahnrad (35) umfasst, und der Behälter (9) einen Boden (13), ein unter dem Boden montiertes Zahnrad (41) und eine über dem Boden montierte und durch das Zahnrad in Drehung versetzte Antriebswelle (42) umfasst, wobei die genannte Antriebswelle fähig ist, ein Küchenzubehör (44) zum Drehen aufzunehmen, wobei das genannte Gerät (1) so konfiguriert ist, dass das Zahnrad (41) bei Positionierung des Behälters (9) in der Kochkammer (6) mit dem Zahnrad (35) in Eingriff kommt.

5. Gerät (1) nach Anspruch 4, wobei die zusätzliche Heizvorrichtung (14) und das erste Verbindungssystem (18) um das Zahnrad (41) unter dem Boden (13) des Behälters (9) angeordnet sind.

6. Gerät (1) nach einem der Ansprüche 4 oder 5, wobei das Gerät ein Dichtungselement (43) umfasst, das zwischen der Antriebswelle (42) und dem Boden (13) des Behälters (9) angeordnet ist.

7. Gerät (1) nach einem der Ansprüche 4 bis 6, wobei das Gerät ein Küchenzubehör (44) umfasst, das aus einem Rührflügel besteht.

8. Gerät (1) nach einem der Ansprüche 1 bis 7, wobei das Gerät einen herausnehmbaren Korb umfasst, der zum Einsetzen in den Behälter (9) und zum Entfernen daraus konfiguriert ist.

## Claims

1. A hot-air cooking appliance (1) for preparing food, comprising a body (2) equipped with a cooking chamber (6), a food receiving bowl (9) capable of being placed in and removed from the cooking chamber, the body (2) having a base (5), a heating device (11) that allows the heating of air and a circulating device (12) that allows the circulation of heated air in the food receiving bowl when it is placed in the cooking chamber, said appliance (1) comprising an additional heating device (14) allowing the heating of the food receiving bowl (9) by thermal conduction and a control circuit configured to manage the additional heating device once the bowl is placed in the cooking chamber, **characterized in that** the body comprises a drawer (3) removably mounted on the base between an engaged position where the cooking chamber (6) is closed and a disengaged position where the cooking chamber is open, the bowl (9) being secured to the drawer (3), the additional heating device (14) being arranged on the food receiving bowl (9), the additional heating device comprising a first electrical and mechanical connection system (18) configured to connect to a complementary second connection system (26) located on the body (2) when positioning the bowl (9) in the cooking chamber (6), said control circuit being configured to manage the additional heating device once the connection between the first and second connection systems is made, the first connection system (18) comprising two conductive pins (16, 17) and the second connection system (26) comprising two conductive connectors (22, 23) each having two flexible lamellae (24, 25), each conductive pin being inserted into a conductive connector by pinching between the two lamellae of said connector, when positioning the bowl (9) in the cooking chamber (6).

2. Appliance (1) according to claim 1, wherein the additional heating device (14) is positioned under a base (13) of the bowl (9), in contact with said base.

3. Appliance (1) according to any one of claims 1 or 2, wherein the additional heating device (14) comprises a resistive electrical element (15) with two ends (15a, 15b), the first connection system (18) being arranged at said ends.

4. Appliance (1) according to anyone of claims 1 to 3, wherein the body (2) comprises a motor controlled by the control circuit and a toothed pinion (35) driven in rotation by the motor, and the bowl (9) comprises a base (13), a toothed wheel (41) mounted in rotation under the base and a drive shaft (42) mounted in rotation above the base and driven in rotation by the toothed wheel, said drive shaft being capable of receiving a kitchen accessory (44) for its rotation, said appliance (1) being configured such that the toothed wheel (41) engages with the toothed pinion (35) when positioning the bowl (9) in the cooking chamber (6).

5. Appliance (1) according to claim 4, wherein the additional heating device (14) and the first connection system (18) are arranged around the toothed wheel (41) under the base (13) of the bowl (9).

6. Appliance (1) according to any one of claims 4 or 5, further comprising a sealing element (43) disposed between the drive shaft (42) and the base (13) of the bowl (9).

7. Appliance (1) according to any one of claims 4 to 6, further comprising a kitchen accessory (44) consisting of a stirring blade.

8. Appliance (1) according toanyone of claims 1 to 7, further comprising a removable basket configured to be placed in the bowl (9) and removed therefrom.
